# EUROPEAN PATENT SPECIFICATION

(11) **EP 1 417 878 B1**
(45) Date of publication and mention of the grant of the patent: **04.07.2007**
(21) Application number: 02748885.7
(22) Date of filing: 11.07.2002
(51) Int. Cl.: A01D 46/26, B06B 1/16

(54) **FORCE BALANCING AND MULTIPLYING DEVICE INTENDED FOR A PORTABLE MECHANICAL COLLECTOR/CONVERTER**
FÜR EINE TRAGBARE MECHANISCHE ERNTE/DRESCHVORRICHTUNG BESTIMMTE KRAFTAUSGLEICHS- UND -VERSTÄRKUNGSVORRICHTUNG
DISPOSITIF EQUILIBREUR ET DEMULTIPLICATEUR DE FORCES DESTINE A UN VIBREUR-COLLECTEUR MECANIQUE PORTATIF

(30) Priority: 11.07.2001 ES 200101631
(43) Date of publication of application: 12.05.2004
(73) Proprietor: Hispaes, S.A., 08182 Sant Feliu de Codines (ES)
(72) Inventor: GURRI MOLINS, José, E-08182 Sant Feliu de Codines (ES)
(74) Representative: Gislon, Gabriele
(86) International application number: PCT/ES2002/000351
(87) International publication number: WO 2003/005801

(56) References cited:
- EP-A- 1 095 554
- ES-A- 2 114 347
- ES-A- 2 120 836
- FR-A- 2 324 378
- GB-A- 2 127 521
- SU-A- 816 421

## Description

### Field of the invention

This invention refers to a device for balancing and multiplying forces applicable to a portable mechanical beating down harvester of the type comprising a base structure, such as a frame, housing or shell, to which an engine is fixed connected through a centrifugal clutch and a reducing device to a mechanism generating vibration capable to convert the rotating motion into an alternate linear vibrating motion, a rod being connected to the exit of said generating mechanism said rod being provided with at least a portion linearly guided with respect to said base structure and a operating member, such as a hook, fixed at the distal end of said rod. In the use, said operating member is fastened to a branch or secondary trunk of a tree or shrub in order to transmit it the vibrating motion to force the fruit pick up from said branch or secondary branch.

Although the device of the invention is very suitable for said beating down harvesters, its application is not limited to them, and it can be extended to other apparatuses which provide an operating member provided with an alternate linear vibrating motion, such as a power hammer.

### Technical background

In the prior art of this sector, several portable mechanical beating down harvesters are known of above type, for example, by the documents FR-A-2305927, US-A-3924390 and the utility model ES-A-1000253, which discloses a basic structure which became general in this type of machines. On the other hand, the documents WO 99/01022 and WO 99/07203, of the present applicant, refer to fittings and improvements for this type of portable mechanical beating down harvesters. In general, these apparatuses incorporate a frame or shell on which the engine is fixed, which is a two-stroke internal combustion engine; the reducer, which is by gears, belts or a match of both; and the generating mechanism, which comprises a connecting rod and a cranked handle or a crankshaft. At one end of the frame or shell, distal from the engine, there is a linearly guiding device for said guided portion of the rod, which shows a long length overhanging up to the hook. The rod can be formed of two or more portions joined by a safety connecting fitting.

EP-A-1095554 discloses a tree shaker incorporating a housing to which is fixed a motor connected to a vibration generating mechanism capable of converting rotation motion into alternate linear motion. A rod provided with at least a portion linearly guided in a track with respect to said frame is connected to the output of the vibration generating mechanism. An operating member is provided at the distal end of said rod.

For the purpose of this specification, it will be generally referred to the "machine" to mention the set of elements the mass centre of which has a fixed position with respect to the frame or shell, that is to say, engine, clutch, drive, parts of the mechanism generating the vibration, etc. and it will be referred to the "rod" to mention the set of elements provided with a component of the to and fro vibrating motion with respect to the frame, that is to say, parts of the cranked handle or crankshaft, the connecting rod, the rod itself, the hook and other fittings associated to them.

There exists a close relation between the weight, or more specifically the mass, of the machine and the force transmitted by the rod to the branch at each shake of the vibrating motion, regardless the turning torque or the engine power. This is so due to the fact that as well the activation force generated by the engine as the travel of the generating mechanism run are shared, due to the reaction and inertia forces, by the machine and the set of rod and branch depending on their respective masses. That is to say, bigger the mass of the machine is with relation to the mass of the set of rod and branch, bigger is the part of the total force and the total run which is transmitted to the rod and therefore, to the branch.

This seems to indicate that it would be advantageous to use machines provided with a big mass compared with the rod and with the size of the branch to beat down. However, said machines result very heavy and causes an early fatigue to the operator which is handling them, which obliges to have frequent breaks between relatively short periods of work. Therefore, from the standpoint of the workforce profitability, the most advantageous is to use an as lightweight machine as possible.

The approaches to this problem provided by portable mechanical beating down harvesters of the prior art consisted in seeking a balanced solution between the weight of the machine and the size of the branches to be beat down, with machines more lightweight for shrub culture, for example coffee and pistachio, and heavier machines for tree culture, such as olive tree, without however exceeding in this later case a weight considered excessive to be continuously handled by an operator. Said limited weight of the machine obliges, even though working with big trees, to beat down thinner branches, which means more slowness in harvesting and, therefore, a smaller performance and a higher cost thereof.

In addition, a relatively lightweight machine has the drawback of an increase of the vibrations sustained by the machine, that is to say, a bigger proportion of the part of force and the part of travel applied to the machine with respect to the total force and run generated by the vibration generating mechanism driven by the engine. This means, on the one hand, more vibrations transmitted to the operator which cause fatigue and, on the other hand, a significant loss of performance of the machine in the beating down work. Also, it must be noted that the operator, when facing a lack of strength of the apparatus, often seeks to oppose the reaction force exerted by his own body to the reaction force exerted by a too thick or strong branch or secondary trunk,so that he receives a great p art of the vibrations generated.

By the prior art, a number of documents are known relative to devices seeking to isolate the operator from the vibrations to which the portable mechanical beating down harvester is submitted, such as for example the patent US-3459269, and the already mentioned patent WO 99/07203, of this applicant.

However, although the operator is isolated from the vibrations, the problem of the loss of performance of the machine still exists.

Due to above exposed, the object of this invention is to contribute with a Force balancing and multiplying device applicable to a portable mechanical beating down harvester apparatus of above disclosed kind, seeking to diminish the vibrations sustained by the machine and increase the performance of the work carried out by the rod.

### Description of the invention

This object is achieved according to this invention, by providing a force balancing and multiplying device applicable to a portable mechanical beating down harvester apparatus, said apparatus being of the kind which comprises a base structure, such as a frame, housing or shell, to which is fixed a motor or power takeoff connected to a centrifugal clutch and a reducing device. The outlet of the reducer is connected to a vibration generating mechanism, capable of converting the input rotating motion into an output alternate linear vibrating motion. A rod, provided with at least a portion linearly guided with respect to said frame is connected to the output of said generating mechanism and an operating member, such as a hook, is fixed at the distal end of said rod. In the use, said hook is fastened on a branch or secondary trunk of a tree or shrub in order to transmit it the vibrating motion generated by the apparatus to force the withdrawal of fruits from said branch or secondary trunk.

The balancing and multiplying device of this invention, which can be applied (but not limited to) this kind of apparatus, is characterised in that it comprises at least a displacing device driven by said engine and coordinated with said generating mechanism to move at least a mass on a to and fro path opposite in the space and simultaneous in the time to the to and fro path from the mass centre of the set of elements linked to the rod provided with an alternate motion with relation to the frame. The value of said mass, which is at least one, and the value of the amplitude of its to and fro path are selected in combination for creating an opposite inertia force capable to balance at least the force of inertia caused by the mass of said set of elements linked to the rod. With this, it is achieved that the actual displacement of the rod with respect to an external point, is equal to the run of the generating mechanism (that is to say, 100% the performance in the displacement), and that the force applied to the hook, which can be applied to a branch is greater, because no power is consumed when vibrating the machine but only the rod. Obviously, a part of the power is consumed in the displacement of the balancing mass which is compensated with a more powerful engine. However, for a same total weight of a beating down apparatus, with the incorporation of the balancing and multiplying device, a run is achieved and an active force is applied to the bigger branches.

According to an example of preferred embodiment, the value of said balancing mass and the amplitude of its to and fro path are selected matched to create an opposed force of inertia bigger than the force of inertia caused by the mass of said set of elements linked to the rod. With this it is achieved to provide a component of active force which is added to the active force provided by the engine to the rod, said increased active force being able to be applied to a branch through a hook. That is to say, the balancing mass matched with its run not only balance the masses of the rod but provide an increased force and an increased amplitude of the actual displacement of the hook, bigger than the run of the generating mechanism. Here also, even taking into account the increase of the weight which can be meant by a more powerful engine, with the incorporation of the balancing and multiplying device of this invention best performances can be achieved with a slight increase of the total weight of the beating down apparatus. Anyway, this slight increase of the weight is much less than the increase of the weight the apparatus of the prior art would sustain to reach an improvement of the service equivalent.

The mechanism of the device moving the counterbalance weigh can be, same as that of the generator mechanism connected to the rod, any known mechanism capable to convert a rotating motion into an alternate linear motion and, preferably, both mechanisms are housed in a protecting housing or shell of the portable beating down apparatus. The runs of both mechanism can be same or different, although anyway they must be related to the respective rod and balancing masses.

In a preferred example of embodiment, the two mechanisms are driven by a same input shaft coming from the reducer and they comprise cranked handles or crankshafts, having diametrally opposite crankpins and connecting rods connecting the respective crankpins with the rod and with the balancing mass, respectively.

However, for displacing the rod and the balancing mass, other mechanisms can be implemented, apart from the cranked handle and connecting rod mechanism, such as eccentric cam mechanisms and follower, drum cam, rotating, tilting disk etc. and match of them. It must be noted that some of the mentioned mechanisms have the input shaft parallel to the output alternate linear displacement, wile others have it perpendicular, therefore the two mechanisms can be driven through a same reducer or through independent reducers or drives with shafts parallel or perpendicular to each other.

### Brief explanation of the drawings

This invention will be best apparent from following detailed description of some examples of embodiment with reference to the drawings appended, in which:
Fig. 1 is a schematic side view of a portable mechanical beating down harvester of the prior art;
Fig. 2 is a schematic diagram illustrating the distribution of forces and displacements of a portable mechanical beating down harvester of the prior art being used, having no Force balancing and multiplying device;
Fig. 3 is a schematic diagram illustrating the distribution of forces and displacements of a portable mechanical beating down harvester of the prior art being used, having a Force balancing and multiplying device according to this invention prepared for balancing the forces of inertia of the apparatus without taking into account external reaction forces;
Fig. 4 is a schematic diagram illustrating the distribution of forces and displacements of a portable mechanical beating down harvester of the prior art being used, having a Force balancing and multiplying device according to this invention prepared for balancing the forces of inertia of the apparatus plus other external reaction forces, such as those exerted by a tree or shrub branch or secondary trunk against the hook;
Fig. 5 is a schematic side view of a portable mechanical beating down harvester provided with a Force balancing and multiplying device according to a preferred embodiment of this invention, which incorporates a double connecting rod and cranked handle mechanism;
Fig. 5A is a schematic side view of a portable mechanical beating down harvester provided with a Force balancing and multiplying device according to another more preferred embodiment of this invention, which incorporates a double connecting rod and cranked handle mechanism;
Fig. 5B is a schematic cross section view taken by the line V-V of Fig. 5A;
Fig. 6 and 7 are very schematic views of examples of the Force balancing and multiplying device according to this invention which incorporates a double connecting rod and cranked handle mechanism and a rotating driving shaft of input parallel to the output alternate linear vibrating motion, applied, for example, to a portable mechanical beating down harvester;
Fig. 7A and 7B are very schematic views of examples of the Force balancing and multiplying device according to this invention which incorporates a double connecting rod and cranked handle mechanism and a rotating driving shaft of input perpendicular to the output alternate linear vibrating motion, applied, for example, to a portable mechanical beating down harvester; and
Fig. 8 to 11 are very schematic views of some other different forms the Force balancing and multiplying device can adopt according to this invention applied, for example to a portable mechanical beating down harvester.

### Detailed description of the exemplary embodiment

In the different figures same numerals have being used to designate analogous elements.

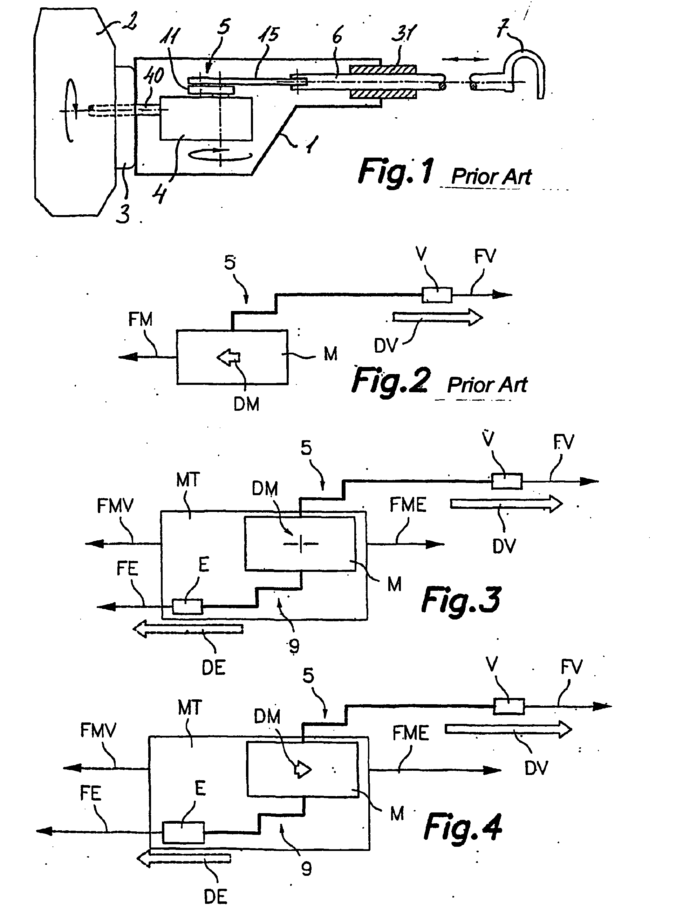

The beating down apparatus of Fig. 1 has a classical form of the prior art. S aid apparatus comprises a base structure, such as a frame 1, housing or shell, to which an engine 2 with a centrifugal clutch 3 (which in some versions is replaced by a power takeoff from an external engine). An input rotating driving shaft 40 coming from said clutch 3 is connected to a vibration generating mechanism 5 through a reducer 4, such as a worm and drum gear, conical gear, pulleys and belt, etc. Said vibration generating mechanism 5 can have different operating principles, but anyway it is capable to convert the rotating motion at the output of the reducer 4 into an alternate vibrating motion at the output of the generating mechanism 5 itself, where it is connected to a rod 6, at a distal end of which is fixed an operating member, such as a hook 7. In the example shown in Fig. 1, the generating mechanism 5 is of the kind which comprises a cranked handle or crankshaft 11 and a connecting rod 15. The rod 6 is provided with at least a portion linearly guided by means of a linear guide 31 fixed at the end of the frame 1 distal from the engine 2.

The apparatus of Fig. 1 is generally equipped with at least a handle (not shown) which integrates the machine control members and a harness or belt (not shown) for loading the apparatus on the shoulder, designed to make an operator capable to carry, control and govern the apparatus for fastening or hooking said operating member 7 on a tree or shrub branch or secondary trunk while the engine 2 is in slow motion and the clutch 3 is uncoupled, and once the branch has been fastened, speed up the engine 2 to couple the clutch to the generating mechanism 5 a nd transmit t o the b ranch o r secondary trunk the vibrating motion of the rod 6 to force the fruit be released from it. Part of the force and the displacement of the vibrating motion is sustained by the machine because the vibrating motion is shared into the machine and the rod proportionally to their respective masses, understanding the terms "machine" and "rod" as they are above described in the point dealing with the technical background. Up to now, the efforts of the constructors was mainly directed to provide devices insulating the vibrations associated to the handles and harnesses. Another factor which was considered favourable, from the standpoint of reducing vibrations was to provide the machine a as big mass as possible in relation with the rod mass. However, this bigger mass of the machine means a heavy load which increases the fatigue of the operator.

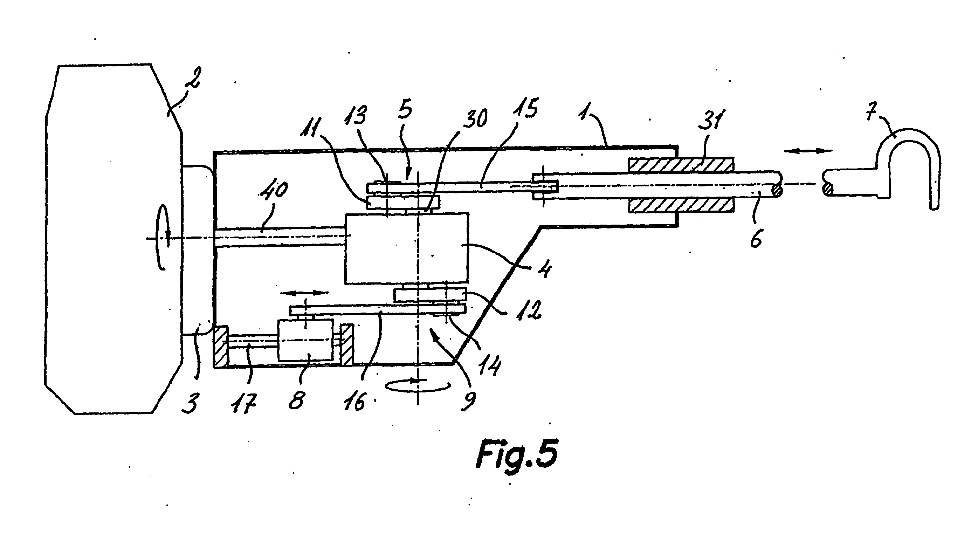

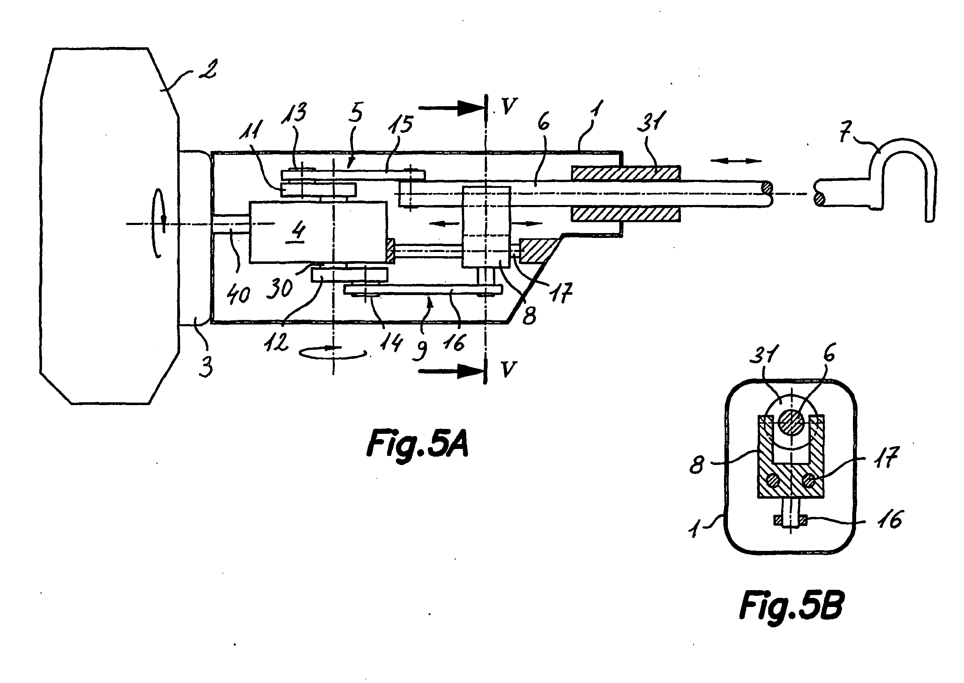

As shown in Fig. 5 and following ones, the device of this invention is incorporated, for example, in a portable mechanical beating down harvester of above described kind in Fig. 1 and it comprises a displacing device 9 driven by said engine 2 or by a power takeoff and coordinated with said generating mechanism 5 for displacing a mass 8 (which together with the associated elements constitutes the balancing mass E of the following examples) in a to and fro path opposite in he space and simultaneous in time to the to and fro path of the centre of masses of the set of elements linked to the rod 6 (which constitute the mass of the rod V in the following examples) provided with alternate motion with relation to the base structure 1. The effects of these masses of the rod 6 and those of balancing 8 vibrating synchronized in opposite directions can be completely balanced and even they can be unbalanced in favour of the useful force and displacement of the apparatus. The values of the masses of the rod 6 and of those of balancing 8, as well as the runs of their vibration alternate linear motions have not necessarily to be the same although it is essential that they keep given relations.

According to a first example of embodiment, the value of the mass 8 matched with the value of the amplitude of its to and fro path is selected to create an opposite force of inertia capable to balance the force of inertia caused by the mass of said set of elements linked to the rod 6.

According to a second example of embodiment, the value of the mass 8 and the amplitude of its to and fro motion are advantageously selected in combination for creating an opposite force of inertia bigger than the force of inertia caused by the mass of said set of elements linked to the rod 6, or "rod" V, in order to provide an active force component which is added to the active force provided by the engine 2 to the rod 6 and which increases the length of the rod 6 displacement with respect to the run of the generating mechanism 5, said increased force and displacement can be applied to a branch through the hook 7.

Fig. 2 to 4 schematically show the distributions of forces and displacements in three examples of a portable mechanical beating down harvester of the kind above described; in Example 1, shown in Fig. 2, the apparatus does not incorporate a balancing multiplying device, that is to say, it is an apparatus of the prior art; in Examples 2 and 3, respectively shown in Fig. 3 and 4, the apparatuses integrate balancing and multiplying devices according to this invention, corresponding, respectively to the two preferred examples of embodiment above described, In Fig. 2, 3 and 4, the lengths of the arrows are proportional, representing the simple arrows the shares of the forces respectively sustained by the "machine" M and the "rod" V of the total of the forces generated by the engine 2, while the dashed line arrows represent the shares of displacement sustained respectively by the "machine" M and the "rod" V of the total displacement or run of the generating mechanism 5.

It must also be stated that the forces are not constant but respond to a sinusoidal function, alternatively and progressively oscillating from a positive maximum and a negative maximum symmetrical with respect to a zero value. The forces mentioned in the following examples correspond to the values of one of the maxims.

### Examples

### Example 1

Example 1 is illustrated in the diagram of Fig. 2 and it corresponds to an apparatus of the prior art as above described with relation to Fig. 1. In Fig. 2, the "machine" M has a mass of 10 Kg, the "rod" V has a mass of 2.5 kg, and the vibration generating mechanism 5 has a total run of 60 mm and carries out 2000 cycles/minute. The force FV applied to the rod V is 3240 N and the reaction force FM applied to the machine M is also 3240 N. However, said equal forces applied on the respective very unequal masses V and M of the rod and the machine makes that out of 60 mm of the vibration displacement available, 48.4 mm correspond to the useful displacement DV of the rod and 11.6 mm correspond to the displacement DM sustained by the machine. This means that the force actually available to be applied to the branch of a tree or shrub is the force FV of 3240N applied to the rod, with a useful displacement performance of 80.7 % and with a residual vibration of the machine body of 11.6 mm amplitude which gives as results disturbances and fatigue to the operator.

### Example 2

Example 2 is illustrated in the diagram of Fig. 3 and corresponds to a portable beating down apparatus equipped with the balancing and multiplying device of this invention, which in this Example 2 is prepared for balancing the apparatus forces of inertia without taking into account external reaction forces, Here, same as in the former example, the machine M has a mass of 10 Kg,, the rod V has a mass of 2.5 Kg and the vibration generating mechanism 5 has a total run of 60 mm and carries out 2000/minute. However, in this example there exists a second vibration generating mechanism, or displacing device 9, which displaces a balancing mass E of 2.5 Kg with a run of 60 mm, that is to say, a ratio of mass and run equivalent to the ratio of mass and run of the rod V. It has to be taken into account that the mass M of the machine has been added to the balancing mass E and therefore, the total mass MT of the machine is now 12.5 Kg. In this example 2, the fist generating mechanism 5 applied a force FV to the rod V which is 4191 N and the related reaction force FMV of the rod applied to the machine MT is also 4191 N. On the other hand, the displacing device 9 applies a force FE of another 4191 N on the balancing mass and the machine MT sustains a reaction force FME with respect to the balancing mass of 4191 N. Here, the forces FME and FMV exerted on the machine MT in opposite directions are equal and applied on equal masses. Therefore, as well the displacement DV of the rod V as the displacement DE in the opposite direction of the mass E are fully equivalent to the 60 mm of the run of the respective vibration generating mechanisms 5,9 and, as the balancing mass E is comprised in the "machine" system, the useful displacement of the rod V with respect to a point external to the apparatus is of 60 mm while the displacement of the machine plus the balancing MT is zero. The force actually available to be applied to the tree or shrub branch is the force FV of 4191 N, with a useful performance of displacement of 100% and without residual vibration of the machine body. This means that the apparatus of the Example 2 is balanced, when idle, as compared with the Example 1 of the prior art, the vibration of the machine body having been eliminated increasing the force applicable to the branch and improving the vibration amplitude.

Obviously, driving the balancing mass E requires an additional contribution of power, that is to say, the machine of the Example 2 requires a more powerful engine with relation to the machine of the Example 1 the prior art. However, the increase of the weight this more powerful engine means, together with the weight of the mass E and the balancing displacing device 9 is proportionally small with relation to the increase of the performances reached or, in other words, a machine can be obtained having same performances and less weight.

### Example 3

The diagram of Fig. 4 illustrates the Example 3 and corresponds to a portable beating down apparatus equipped with the balancing and multiplying device of this invention, which, in this example 3 is prepared for balancing the forces of inertia of the apparatus and, in addition, it has available an excess of balancing force which can balance fully or partly the external reaction force exerted by the tree or shrub branch or secondary trunk to which the hook 7 is applied. In this case, equal as in the former examples, the machine M has a mass of 10 Kg., the rod V has a mass of 2.5 Kg and the vibration generating mechanism 5 has a total run of 60 mm and carries out 2000 cycles/minute. Also, in this example there exists a second vibration generating mechanism or displacing device 9, which, however, displaces here a balancing mass E of 5 Kg with a run of 60 mm, that is to say, a ratio of mass and balancing run clearly higher than the ratio of mass and run of the rod V. In this case, the total mass MT of the machine is 15 Kg.

In this example 3, the force FV applied to the rod V by the first generating mechanism 5 is 4778 N and the corresponding reaction force FMV of the rod applied to the machine MT is also 4778N. On the other hand, the displacing device 9 applies a force FE of 7870 N on the balancing mass E and the machine MT sustains a reaction force FME with respect to the balancing mass also of 7870 N. Here the forces F ME exerted on the set of the machine body MT is clearly higher than the force FMV applied on the same machine MT in opposite direction. Therefore, there exists a favourable unbalance in the direction of displacement of the rod which causes a displacement DM of the machine MT in this direction of 8.55 mm. This displacement DM is carried out at the expense of the displacement DE in the opposite direction of the balancing mass, which is now only 51.45 mm. On the other hand, the useful displacement of the rod V is increased to 68.55 mm. The actually available force to be applied to the branch of a tree or shrub is the force FME, that is to say, 7180N, with a performance of useful displacement of 114.2%, that is to say, with a residual vibration of the machine body in same direction as the displacement of the rod V. This means that the apparatus of Example 3 can be balanced, operating with the rod applied to a branch of tree or shrub having the suitable thickness or strength, for the reaction of said branch. The device of this invention can have a drawing depending on the thickness or strength s ought for the culture to which it is designed. In addition, in Example 3 the total force applicable to the branch has been increased and the performance of the extent of the vibration has significantly been improved reaching a larger extent that the run itself of the apparatus vibration generating mechanism 5.

The comparative results of the former examples are summarized in the Table below.

**Table**

| | Example 1 prior art | Example 2 of the invention | Example 3 of the invention |
|---|---|---|---|
| Vibration frequency (cycles/minute) | 2000 | 2000 | 2000 |
| Mass of the machine body (Kg) | 10 | 10 | 10 |
| Moving mass associated to the rod (Kg) | 2.5 | 2.5 | 2.5 |
| Balancing moving mass (Kg) | - | 2.5 | 5 |
| Rod displacement run (mm) | 60 | 60 | 60 |
| Balancing mass displacement run (mm) | - | 60 | 60 |
| Total useful force (N) | 3240 | 4191 | 7180 |
| Actual displacement of the rod (mm) | 48.55 | 60 | 68.55 |
| Performance of the displacement of the rod (%) | 80.7 | 100 | 114.2 |

Referring now to Fig. 5, it shows a portable mechanical beating down apparatus equipped with the Force balancing and multiplying device of this invention according to a preferred example of embodiment thereof.

The apparatus of Fig. 5 has a general form similar to that of the apparatus of the prior art shown in Fig. 1, comprising a base structure, such as a frame, housing or shell 1, to which is fixed a motor 2 equipped with a centrifugal clutch 3. An input rotating driving shaft 40 coming from said clutch 3, drives a reducer 4, such as a worm and drum gear, said output shaft being coupled to the input shaft 30 of a vibration generating mechanism 5 comprising a cranked handle or crankshaft 11 linked through a crankpin 13 to a connecting rod 15. At the end of the frame 1 opposite to the engine 2 is mounted a linear guide 31 for a rod 6 which has an internal end connected to said connecting rod 15 and an external distal end in which is fixed an operating member, such as a hook 7.

The difference is that the apparatus of Fig. 5 incorporates a displacing device 9, which is a second vibration generating mechanism capable of converting the rotation motion of the output shaft 30 of the reducer 4 into an alternate linear motion. In this example of embodiment, the output shaft 30 of the reducer is the common input shaft for both vibration generating mechanisms 5,9. The displacing device 9 comprises a second cranked handle or crankshaft 12 mounted on said input shaft 30, with a second crankpin 14 linked to the mass 8, which is displacing on a second linear guide 17.

Said first and second crankpins 13, 14 are angularly offset from each other 180° to secure that the displacements of the first and second connecting rods 15, 16 respectively connected to the rod 6 and the mass 8 are simultaneously carried out and in opposite directions.

Preferably, the displacing device 9, the linear guide 17 and the mass 8 are housed inside a protecting housing (which could be integrated in the supporting structure 1) of the mechanisms of said portable mechanical beating down harvester.

As it can be noted, in the example of embodiment of the Fig 5 as well the path of the alternate linear vibrating motion of the rod 6, at the output of said generating mechanism 5 as the path of the alternate linear vibrating motion of the mass 8 at the output of said displacing device 9 are perpendicular to the shaft 30 of the rotating motion at the input of it. In addition, the two vibration generating mechanisms have an input shaft 30 common driven by the engine 2 through the same reducer 4.

In the Fig. 5A a portable mechanical beating down apparatus is shown, equipped with the Force balancing and multiplying device of this invention according to another more preferred example of embodiment, which is similar to that shown at Fig. 5 except that here the second connecting rod 16 which connects the second crankpin 14 of the second cranked handle or crankshaft 12 with the mass 8, is directed towards the same part of the shell 1 as the first connecting rod 15, which connects the first crankpin 13 of the first cranked handle or crankshaft 11 with the rod 6. With this, the area within which the mass centre of the elements linked to the mass 8 is approaching the area within which is oscillating the centre of masses of the elements linked to the rod 6 lengthwise resulting in a reduction of the turning moments according to a shaft transversal to the apparatus produced by the displacements of said two centres of masses. An approach of the paths of the centres of the masses in a crosswise direction is wished, the ideal being that both paths are coaxial. The arrangement shown in Fig. 5A allows said an approach of both paths, which is improved by providing the mass 8 with a wrapping a portion of the rod 6. Said form can best be noted in the cross section of Fig. 5B, where the mass 8 has a U-shaped cross sectional profile which partly surrounds the area of the internal end of the rod 6. The linear guide 17 of the path of the mass 8 is constituted, in the example of Fig. 5B by a pair of parallel bars passed by corresponding holes existing at the mass 8, eventually with the collaboration of sliding bearings (not shown), so that, it prevents the rotation of the mass 8.

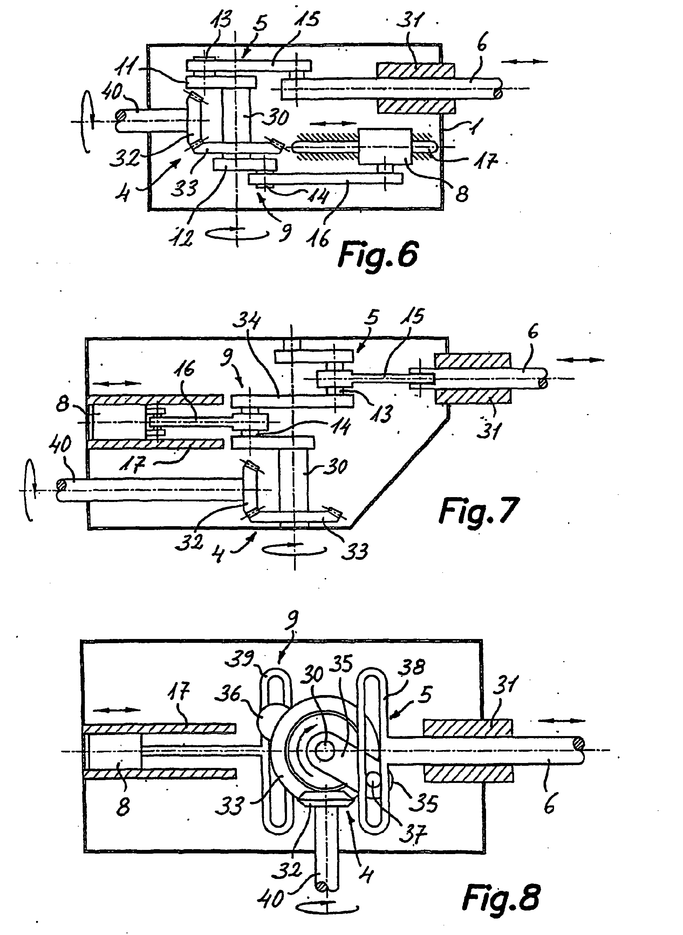

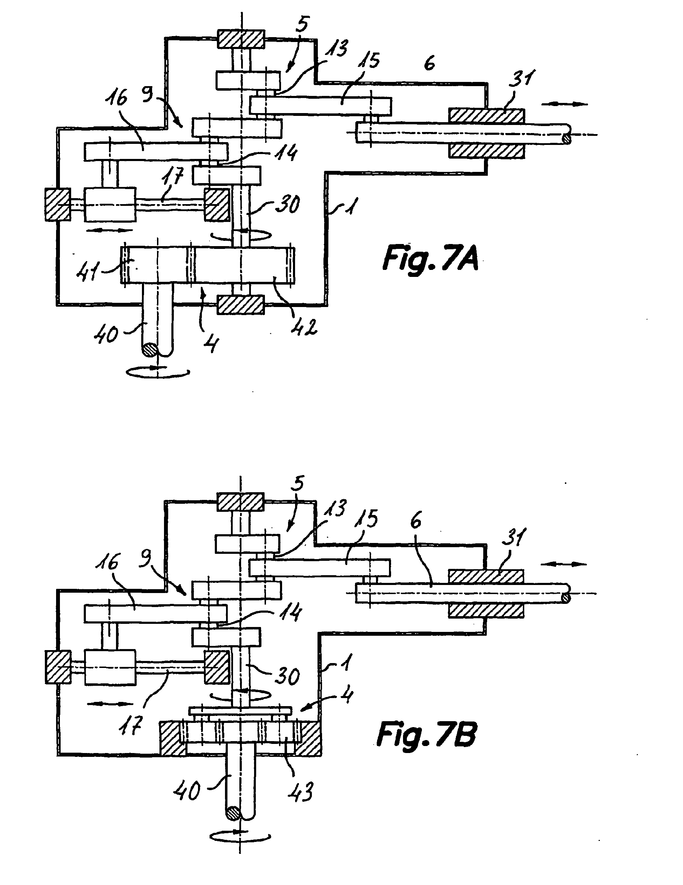

In the Fig. 6 and 7, other arrangements are shown which shows a form similar to that of the Fig. 5 and 5A.

Thus, at Fig. 6 the reducer 4 is a toothed pinion conical gear 32 fixed on the input rotating driving shaft 40 and crown wheel 33 fixed on the input shaft 30 which has two ends, on each of them is respectively mounted the first and second cranked handles 11, 12 linked to connecting rods 15 and 16 driving the rod 6 and balancing mass 8, respectively.

In the apparatus of Fig. 7 the reducer 4 also comprises a toothed pinion conical gear 32 and a crown wheel 33, but here the input shaft 30 is coupled to a crankshaft 34 provided with two eccentric crankpins 13, 14 angularly offset 180°C, said eccentric crankpins 13, 14 are respectively linked to the connecting rods 15, 16 driving the rod 6 and balancing mass 8, respectively.

The mechanisms of the apparatuses shown in Fig. 7A and 7B are exactly similar to those shown in Fig. 7 except that the shaft which rotatably drives the input 40 is perpendicular to the output alternate linear vibrating motion. In the mechanism of Fig. 7A, the coupling of said input rotating driving shaft 40 coupling to the input shaft 30, common to both mechanisms 5,9, comprises a toothed pinion gear 41 and toothed wheel 22 having parallel shafts while in the mechanism of the Fig. 7B, the coupling of said shaft 40 to the input shaft 30 comprises an epicyclical gear 43. In both cases, said arrangement of the input shaft 40 perpendicular to the vibrating motion would allow to place the engine 2 (not shown in Fig. 7A and 7B) at the lower part of the shell 1 so that said shaft 40 is kept, during the use, at a substantially upright plane by the effect of gravity.

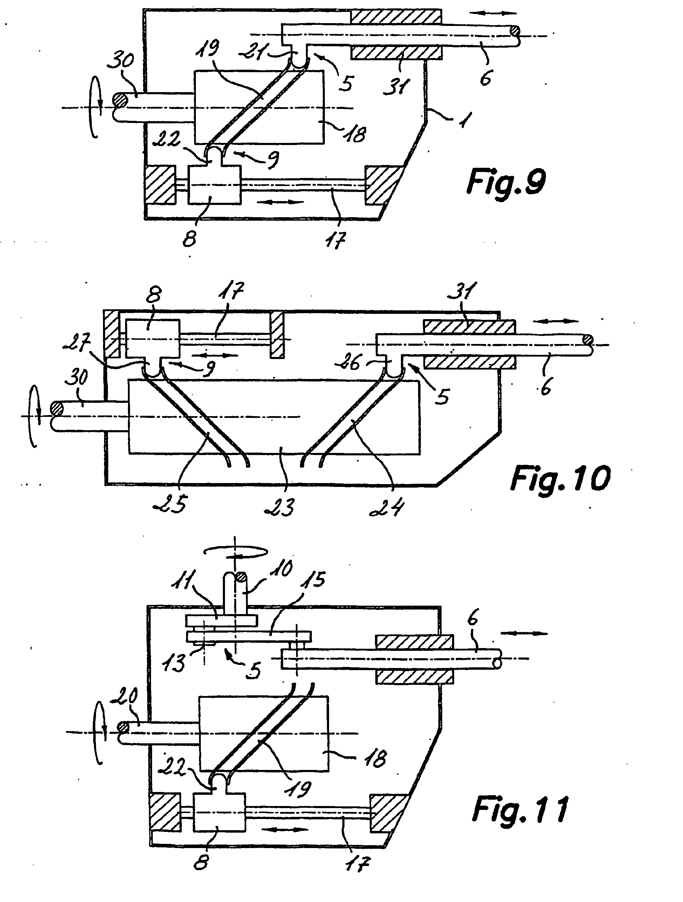

Another variation for the vibration generating mechanisms 5, 9 are illustrated in Fig. 8. In this case the input rotating driving shaft 40 is coupled by means of a toothed pinion conical gear 32 and a crown wheel 33 to communicate a rotating motion to an input shaft 30 common for both mechanisms 5,9, which are made in the form of sinusoidal mechanisms composed by respective cranked handle 35, 36 provided with stubs 37 sliding on guides 38, 39 respectively connected with the rod 6 and the mass 8.

There exists other variations (not shown) of vibration generating mechanisms with an input shaft perpendicular to the output shaft which can be applied to the device of this invention. One of said variations could comprise an eccentric cam and follower mechanism, for example, in the form of a small wheel fixed at the end proximal to the vibrating rod or a stem connected to the balancing mass, the rod and/or said stem acting against the strength of a retraction spring.

Referring now to following figures 9 to 11, they show other examples of embodiment in which both vibration generating mechanisms 5, 9 have their input shaft parallel to their output shaft.

In the apparatus of the Fig. 9, the output shaft of the reducer (not shown) is coupled to the input shaft 30 of a drum cam 18, which comprises a single cam slot 19 to which is linked a first and a second followers 21, 22 arranged at areas of said slot 19 angularly offset 180° with respect to the central shaft of the drum 18, said first follower 21 being linked to the end proximal to the rod 6 and said second follower 22 being linked to the mass 8, which moves on a linear guide 17.

In the apparatus of Fig. 10, the output shaft of the reducer (not shown) is also coupled to the input shaft 30 of a drum cam 23 which incorporates a first and second cam slots 24, 25 having opposite paths with respect to a plane perpendicular to the central shaft of the drum 23. A first follower 26, linked to the end proximal to the rod 6, is coupled to said first slot 24 and a second follower 27, linked to the mass 8, is coupled to the second slot 25. The mass 8 is displaced on a linear guide 17.

Also for the vibration generating mechanism with an input shaft parallel to the output shaft there exists other variations (not shown) which can be applied to the device of this invention. One of said variations could comprise a mechanism having a tilting disk, fixed tilted with respect to the shaft of the corresponding generating or displacing mechanism and a follower, for example, having the shape of a small wheel fixed to the end proximal to the vibrating rod or a stem connected to the balancing mass, the rod and or said stem acting against the strength of a retraction spring.

Although in above described devices, with reference to Fig. 5 to 10, the two generating 5 and displacing 9 devices share a single input shaft 30 coming from the reducer 4 and both mechanisms are, in each case, of same nature, the balancing and multiplying device of this invention could contribute for said generating 5 and displacing 9 devices, mechanisms having different nature and/or driven by independent input shafts.

In the example of embodiment shown in Fig. 11, the generating mechanism 5 has an input shaft 10 independent from the shaft 20 of the inputs of the displacing device 9. Each of the input shafts 10, 20 is connected to the engine 2 driving force, or to another equivalent power takeoff through independent reducers (not shown). It is foreseen that the rotation speed of both input shafts 10, 20 are synchronized, for example, for the two reducers receiving the driving power from a common shaft. The conversion of the rotation motion of the shaft 10 into the alternate linear motion of the rod 6, is achieved by means of a connecting rod 15 and cranked handle 11 mechanism similar to those shown in Fig. 5 and 6 while the conversion of the rotation motion of the shaft 20 into the alternate linear motion of the mass 8 is achieved by means of a drum cam 18 and follower 22 similar to that shown in Fig. 9.

It is obvious that a man of the art would be capable to apply other variations for the vibration generating and mass displacing the balancing mechanisms without being out of the object of this invention the extent of which is defined by the claims appended.

## Claims

1. Portable alternate linear vibrating motion apparatus, of the type comprising a base structure, such as a frame, housing or shell (1), to which is fixed a motor (2) or power takeoff connected to a vibration generating mechanism (5) capable of converting rotating motion into alternate linear vibrating motion, a rod (6) being connected to the output of the generating mechanism (5) and provided with at least a portion linearly guided with respect to said frame (1) in a guide (31) and an operating member (7), at the distal end of said rod (6) **characterized in that** it comprises at least one displacing device (9) driven by said engine (2) or power takeoff and coordinated with said generating mechanism (5) to move at least a mass (8) on a to and fro path opposite in space and simultaneous in time to the to and fro path of the mass centre of the set of elements linked to the rod (6) provided with an alternate motion relative to the base structure (1) the value of said at least one mass (8) and the value of the amplitude of its to and fro path being selected in combination for creating an opposite inertia force capable to balance at least the force of inertia caused by the mass of said set of elements linked to the rod (6).

2. Apparatus, according to claim 1, **characterized in that** the value of said mass (8), which is at least one, and the amplitude of its to and fro path being selected in combination for creating a opposite inertia force greater than the force of inertia caused by the mass of said set of elements linked to the rod (6) in order to provide an active force component which is added to the active force provided by the engine (2) to the rod (6) and which increases the amplitude of the rod (6) displacement with respect to the run of the generating mechanism (5), said increased active force and displacement being able to be applied to an external element through said operating member (7).

3. Apparatus, according to claim 1 or 2, **characterized in that** said displacing device (9) and the mass (8) are housed within a shell, frame or housing (1) of said portable mechanical beating down harvester, said shell, frame or housing (1) housing in addition at least a reducing device (4) and said generating mechanism (5).

4. Apparatus, according to claim 1 or 2, **characterized in that** an area within which the mass (8) oscillates is close to an area wherein an internal end of the rod (6) oscillates, and **in that** the mass (8) has a U-shaped cross section profile which partly surrounds a portion of the rod (6).

5. Apparatus, according to claim 1, **characterized in that** the path of the rod (6) alternate linear vibrating motion at the output of said generating mechanism (5) is perpendicular to the shaft (10) of the rotating motion at the input thereof, the generating mechanism (5) being selected from a group including a connecting rod and crankshaft or cranked handle mechanism and an eccentric cam and follower mechanism.

6. Apparatus according to claim 5, **characterized in that** the path of the alternate linear vibrating motion of the mass (8) at the output of said displacing device (9) is perpendicular to the shaft (20) of the rotating motion at the input thereof, said generating mechanism (5) being selected from a group which includes a connecting rod and crankshaft or cranked handle mechanism and an eccentric cam and follower mechanism.

7. Apparatus, according to claim 6, **characterized in that** said shafts (10, 20) of input to the generating (5) and displacing (9) device, respectively, are built in a single shaft (30) common to both devices, which are of same kind or of matched different kinds.

8. Apparatus, according to claim 7, **characterized in that** the generating (5) and displacing (9) devices comprise respectively a first and second cranked handle or crankshaft (11,12) mounted on said shaft (30) of input, with a first and second crankpins (13,14) angularly offset from each other 180° and a first connecting rod (15) linking said crankpin (13) with the end proximal to the rod (6) and a second connecting rod (16) linked to said second crankpin (14) with the mass (8) which is moving on a linear guide (17) parallel to said guide (31) of the rod.

9. Apparatus, according to claim 5, **characterized in that** the path of the alternate linear vibrating motion of the mass (8) at the output of said displacing device (9) is parallel to the shaft (20) of the rotating motion at the input thereof, said generating mechanism (5) being selected from a group which includes a drum cam and follower mechanism and an oscillating disk inclined with respect to the spin axis and follower mechanism.

10. Apparatus according to claim 6 or 9, **characterized in that** said shaft (20) at the input of the displacing device (9) is connected to the driving power of the engine (2) through a reducer device independent from said reducer device (4) coupled on the input shaft (10) of the generating mechanism (5).

11. Apparatus, according to claim 1, **characterized in that** the path of the alternate linear vibrating motion of the rod (6) at the output of said generating mechanism (5) is parallel to the shaft of the rotating motion at the input thereof, said generating mechanism (5) being selected from a group including a drum cam and follower mechanism and an oscillating disk inclined with respect to the spin axis and follower mechanism.

12. Apparatus, according to claim 11, **characterized in that** the path of the alternate linear vibrating motion of the mass (8) at the output of said displacing device (9) is parallel to the shaft (20) of the rotating motion at the input thereof, the generating mechanism (20) being selected from a group including a drum cam and follower mechanism and an oscillating disk inclined with respect to the spin axis and follower mechanism.

13. Apparatus, according to claim 12, **characterized in that** said shafts (10, 20) of input to the generating (5) and displacing (9) devices respectively, are built in a single shaft (30) common to both devices, which are of same kind or of matched different kinds.

14. Apparatus according to claim 13, **characterized in that** the generating (5) and displacing (9) devices comprise a drum cam (18) having a single cam slot (19) to which are linked a first and a second followers (21, 22) arranged in areas of said slot (19) angularly offset 180° with respect to the central shaft of the drum (18), said first follower (21) being linked to the end proximal to the rod (6) and said second follower (22) linked to the mass (8) which is moving on a linear guide (17).

15. Apparatus, according to claim 13, **characterized in that** the generating (5) and displacing (9) devices comprise a drum cam (23) with a first and second slots of cam (24, 25) having opposite paths with respect to a plane perpendicular to the drum (23) central shaft, a first follower (26) being arranged coupled to said first slot (24) and linked to the end proximal to the rod (6) and a second follower (27) coupled to the second slot (25) and linked to the mass (8) which is moving on a linear guide (17).

16. Apparatus, according to claim 11, **characterized in that** the path of the alternate linear vibrating motion of the mass (8) at the output of said displacing device (9) is perpendicular to the shaft (20) of the rotating motion at the input thereof, the generating mechanism (5) being selected from a group which includes a connecting rod and crankshaft or cranked handle mechanism and an eccentric cam and follower mechanism.

17. Apparatus according to claim 12 or 16, **characterized in that** said shaft (20) at the input of the displacing device (9) is connected to the driving power of the engine (2) through a reducer device independent from said reducer device (4) connected to the input shaft (10) of the generating mechanism (5).

18. Apparatus, according to claim 1 or 2, **characterized in that** said apparatus is a portable mechanical beating down harvester and said operating member (7) is a hook able to be fastened on a tree or shrub branch or secondary trunk in order to transmit said vibrating motion thereto in order to force the withdrawal of the fruit from there.

## Patentansprüche

1. Tragbarer abwechselnder Längsschüttelbewegungsapparat mit einem Grundaufbau wie z.B. einem Rahmen, Gehäuse bzw. Ummantelung (1), an dem ein Motor (2) bzw. Abtrieb befestigt ist, der mit einem Schüttelbewegungsmechanismus (5) verbunden ist, der zur Umwandlung einer Drehbewegung in eine abwechselnde Längsschüttelbewegung befähigt ist, einer Stange (6), die mit dem Ausgang des Schüttelbewegungsmechanismus (5) verbunden und mit mindestens einem bezüglich des Rahmens (1) in einer Führung (31) linear geführten Bereichs und einem Betätigungselement (7) am distalen Ende der Stange (6) versehen ist, **dadurch gekennzeichnet, dass** er mindestens eine durch den Motor (2) bzw. Abtrieb angetriebenen und mit dem Schüttelbewegungsmechanismus (5) koordinierte Verschiebevorrichtung (9) aufweist, mit der zumindest eine Masse (8) auf einem Vor- und Rücklaufweg bewegt wird, der zu dem Vor- und Rücklaufweg des Schwerpunkts des Satzes von Elementen, der mit der mit einer abwechselnden Bewegung bezüglich des Grundaufbaus (1) versehenen Stange (6) verknüpft ist, räumlich entgegengesetzt und zeitlich gleichzeitig ist, wobei der Wert der zumindest einen Masse (8) und der Amplitudenwert ihres Vor- und Rücklaufwegs zusammen so ausgewählt werden, dass eine gegenläufige Trägheitskraft erzeugt wird, mit der zumindest die durch die Masse des mit der Stange (6) verknüpften Satz von Elementen verursachte Trägheitskraft ausgeglichen werden kann.

2. Apparat nach Anspruch 1, **dadurch gekennzeichnet, dass** der Wert der zumindest einen Masse (8) und die Amplitude ihres Vor- und Rücklaufwegs zusammen so ausgewählt werden, dass eine gegenläufige Trägheitskraft erzeugt wird, die größer ist als die durch die Masse des mit der Stange (6) verknüpften Satzes von Elementen verursachte Trägheitskraft, so dass eine wirksame Kraftkomponente entsteht, die zu der durch den Motor (2) an die Stange (6) gelieferte wirksame Kraft addiert wird, wodurch die Amplitude der Verschiebung der Stange (6) bezüglich des Laufs des Schüttelbewegungsmechanismus (5) erhöht wird, wobei die erhöhte wirksame Kraft und die Verschiebung über das Betätigungselement (7) an ein Außenelement übertragen werden kann.

3. Apparat nach Anspruch 1 oder 2, **dadurch gekennzeichnet, dass** die Verschiebevorrichtung (9) und die Masse (8) in einer Ummantelung, Rahmen oder Gehäuse (1) der tragbaren mechanischen Schüttelerntemaschine untergebracht sind, wobei in der Ummantelung, Rahmen oder Gehäuse (1) außerdem zumindest eine Reduziervorrichtung (4) sowie der Schüttelbewegungsmechanismus (5) untergebracht sind.

4. Apparat nach Anspruch 1 oder 2, **dadurch gekennzeichnet, dass** ein Bereich, in dem sich die Masse (8) hin- und herbewegt, nahe eines Bereiches liegt, in dem sich ein Innenende der Stange (6) hin- und herbewegt, und dass die Masse (8) ein U-förmiges Querschnittsprofil aufweist, das teilweise einen Teil der Stange (6) umgibt.

5. Apparat nach Anspruch 1, **dadurch gekennzeichnet, dass** der Weg der abwechselnden Längsschüttelbewegung der Stange (6) am Ausgang des Schüttelbewegungsmechanismus (5) senkrecht zur Welle (10) der Drehbewegung an dessen Eingang verläuft, wobei der Schüttelbewegungsmechanismus (5) aus der Gruppe bestehend aus Pleuelstange und Kurbelwelle bzw. Kurbelmechanismus und Exzenternockenstößelmechanismus ausgewählt ist.

6. Apparat nach Anspruch 5, **dadurch gekennzeichnet, dass** der Weg der abwechselnden Längsschüttelbewegung der Masse (8) am Ausgang der Verschiebevorrichtung (9) senkrecht zur Welle (20) der Drehbewegung an deren Eingang verläuft, wobei der Schüttelbewegungsmechanismus (5) aus der Gruppe bestehend aus Pleuelstange und Kurbelwelle bzw. Kurbelmechanismus und Exzenternockenstößelmechanismus ausgewählt ist.

7. Apparat nach Anspruch 6, **dadurch gekennzeichnet, dass** die Wellen (10, 20) am Eingang zu der Schüttelbewegungs- (5) bzw. Verschiebevorrichtung (9) als gleich- oder verschiedenartige Einzelwelle (30) ausgeführt sind, die beiden Vorrichtungen gemeinsam ist.

8. Apparat nach Anspruch 7, **dadurch gekennzeichnet, dass** die Schüttelbewegungs- (5) und Verschiebevorrichtung (9) jeweils eine erste und zweite Kurbel bzw. Kurbelwelle (11, 12), die an der Eingangswelle (30) montiert sind, wobei ein erster und zweiter Kurbelzapfen (13, 14) gegeneinander um einen Winkel von 180° versetzt sind, sowie eine erste Pleuelstange (15), mit der der Kurbelzapfen (13) mit dem nahen Ende der Stange (6) verknüpft wird, und eine zweite Pleuelstange (16) aufweisen, mit der der zweite Kurbelzapfen (14) und die Masse (8) verknüpft sind, wobei die Masse (8) sich auf einer zu der Führung (31) der Stange parallelen Führung (17) bewegt.

9. Apparat nach Anspruch 5, **dadurch gekennzeichnet, dass** der Weg der abwechselnden Längsschüttelbewegung der Masse (8) am Ausgang der Verschiebevorrichtung (9) parallel zur Welle (20) der Drehbewegung an deren Eingang verläuft, wobei der Schüttelbewegungsmechanismus (5) aus der Gruppe bestehend aus Trommelnockenstößelmechanismus und bezüglich der Drehachse und des Stößelmechanismus schrägen Schwingscheibe ausgewählt ist.

10. Apparat nach Anspruch 6 oder 9, **dadurch gekennzeichnet, dass** die Welle (20) am Eingang der Verschiebevorrichtung (9) über eine Reduziervorrichtung, die unabhängig von der mit der Eingangswelle (10) des Schüttelbewegungsmechanismus (5) gekoppelten Reduziervorrichtung (4) ist, mit der Antriebsleistung des Motors (2) verbunden ist.

11. Apparat nach Anspruch 1, **dadurch gekennzeichnet, dass** der Weg der abwechselnden Längsschüttelbewegung der Stange (6) am Ausgang des Schüttelbewegungsmechanismus (5) parallel zur Welle der Drehbewegung an dessen Eingang verläuft, wobei der Schüttelbewegungsmechanismus (5) aus der Gruppe bestehend aus Trommelnockenstößelmechanismus und bezüglich der Drehachse und des Stößelmechanismus schrägen Schwingscheibe ausgewählt ist.

12. Apparat nach Anspruch 11, **dadurch gekennzeichnet, dass** der Weg der abwechselnden Längsschüttelbewegung der Masse (8) am Ausgang der Verschiebevorrichtung (9) parallel zur Welle (20) der Drehbewegung an deren Eingang verläuft, wobei der Schüttelbewegungsmechanismus (5) aus der Gruppe bestehend aus Trommelnockenstößelmechanismus und bezüglich der Drehachse und des Stößelmechanismus schrägen Schwingscheibe ausgewählt ist.

13. Apparat nach Anspruch 12, **dadurch gekennzeichnet, dass** die Wellen (10, 20) am Eingang zu der Schüttelbewegungs- (5) bzw. Verschiebevorrichtung (9) als gleich- oder verschiedenartige Einzelwelle (30) ausgeführt sind, die beiden Vorrichtungen gemeinsam ist.

14. Apparat nach Anspruch 13, **dadurch gekennzeichnet, dass** die Schüttelbewegungs- (5) und Verschiebevorrichtung (9) eine Trommelnocke (18) mit einer Nockennut (19) aufweist, mit der ein erster und zweiter Stößel (21, 22) verknüpft sind, die im Bereich der Nut (19) bezüglich der Zentralwelle der Trommel (18) gegeneinander um einen Winkel von 180°C versetzt angeordnet sind, wobei der erste Stößel (21) mit dem nahen Ende der Stange (6) und der zweite Stößel (22) mit der auf der Linearführung (17) bewegten Masse (8) verknüpft ist.

15. Apparat nach Anspruch 13, **dadurch gekennzeichnet, dass** die Schüttelbewegungs- (5) und Verschiebevorrichtung (9) eine Trommelnocke (23) mit einer ersten und zweiten Nockennut (24, 25) mit gegenläufigen Wegen bezüglich einer zur Zentralwelle der Trommel (23) senkrechten Ebene, einen ersten Stößel (26), der mit der ersten Nut (24) gekoppelt angeordnet und mit dem nahen Ende der Stange (6) verknüpft ist, und einen zweiten Stößel (27) aufweist, der mit der zweiten Nut (25) gekoppelt und mit der auf der Linearführung (17) bewegten Masse (8) verknüpft ist.

16. Apparat nach Anspruch 11, **dadurch gekennzeichnet, dass** der Weg der abwechselnden Längsschüttelbewegung der Masse (8) am Ausgang der Verschiebevorrichtung (9) senkrecht zur Welle (20) der Drehbewegung an deren Eingang verläuft, wobei der Schüttelbewegungsmechanismus (5) aus der Gruppe bestehend aus Pleuelstange und Kurbelwelle bzw. Kurbelmechanismus und Exzenternockenstößelmechanismus ausgewählt ist.

17. Apparat nach Anspruch 12 oder 16, **dadurch gekennzeichnet, dass** die Welle (20) am Eingang der Verschiebevorrichtung (9) über eine Reduziervorrichtung, die unabhängig von der mit der Eingangswelle (10) des Schüttelbewegungsmechanismus (5) gekoppelten Reduziervorrichtung (4) ist, mit der Antriebsleistung des Motors (2) verbunden ist.

18. Apparat nach Anspruch 1 oder 2, **dadurch gekennzeichnet, dass** es sich bei dem Apparat um eine tragbare mechanische Schüttelerntemaschine und bei dem Betätigungselement um einen Haken (7) handelt, der an einem Baum, Strauchzweig oder Nebenstamm befestigt wird, um an diesen die Schüttelbewegung zu übertragen, um hierdurch von diesem die Obstentnahme zu erzwingen.

## Revendications

1. Appareil portable mouvant vibrateur linéaire alterné du type comportant une structure de base telle qu'un châssis, bâti ou coquille (1) sur lequel est fixé un moteur (2) ou prise de force reliée à un mécanisme générateur de vibrations (5) capable de convertir le mouvement tournant en un mouvement vibrant linéaire alterné, une tige (6) étant reliée à la sortie du mécanisme générateur (5) et pourvu d'au moins une portion linéairement guidée par rapport à ce châssis (1) sur une glissière de guidage (31) et un membre de commande (7) à l'extrémité distale de cette tige (6) **caractérisée en ce qu'**elle comporte au moins un dispositif de déplacement (9) commandé par ce moteur (2) ou prise de force et coordonné avec ce mécanisme générateur (5) pour déplacer au moins une masse (8) sur un trajet de va et vient opposé en espace et simultané en temps au trajet de va et vient du centre de la masse de l'ensemble d'éléments reliés à la tige (6) pourvu d'un mouvement alterné par rapport à la structure de base (1), la valeur de cette au moins une masse (8) et la valeur de l'amplitude de son va et vient étant sélectionnées en combinaison pour créer une force d'inertie opposée capable de compenser au moins la force d'inertie causée par la masse de cet ensemble d'éléments relié à la tige (6).

2. Appareil, conformément à la revendication 1, **caractérisé en ce que** la valeur de cette masse (8), qui est au moins une, et l'amplitude de son va et vient étant sélectionnées en combinaison pour créer une force d'inertie opposée plus grande que la force d'inertie causée par la masse de cet ensemble d'éléments relié à la tige (6) afin de fournir un composant de force active qui est ajoutée à la force active fournie par le moteur (2) à la tige (6) et qui accroît l'amplitude du déplacement de la tige (6) par rapport à la course du mécanisme générateur (5), cette force active et ce déplacement accrus étant capables d'être appliqués à un élément externe à travers ce membre de commande (7).

3. Appareil, conformément à la revendication 1 ou 2, **caractérisé en ce que** ce dispositif de déplacement (9) et la masse (8) sont logés à l'intérieur d'une coquille, d'un châssis ou bâti (1) de cette moissonneuse batteuse mécanique portable, cette coquille, ce châssis ou bâti (1) logeant de plus au moins un dispositif réducteur (4) et ce mécanisme générateur (5).

4. Appareil, conformément à la revendication 1 ou 2, **caractérisé en ce qu'**une région à l'intérieur de laquelle la masse (8) oscille est à proximité d'une région dans laquelle une extrémité interne de la tige (6) oscille et **en ce que** la masse (8) a un profil à coupe transversale en U qui entoure en partie une portion de la tige (6).

5. Appareil, conformément à la revendication 1, **caractérisé en ce que** le trajet du mouvement de vibration linéaire alterné de la tige (6) à la sortie de ce mécanisme générateur (5) est perpendiculaire à l'axe (10) du mouvement de rotation à son entrée, le mécanisme générateur (5) étant sélectionné d'un groupe comportant une bielle et un arbre manivelle ou un mécanisme à poignée coudée et une came excentrique et un mécanisme subordonné.

6. Appareil, conformément à la revendication 5, **caractérisé en ce que** le trajet du mouvement vibrateur linéaire alterné de la masse (8) à la sortie de ce dispositif mouvant (9) est perpendiculaire à l'axe (20) du mouvement tournant à son entrée, ce mécanisme générateur (5) étant sélectionné d'un groupe qui comporte une bielle et un arbre manivelle ou un mécanisme à poignée coudée et une came excentrique et un mécanisme subordonné.

7. Appareil conformément à la revendication 6, **caractérisé en ce que** ces axes (10,20) d'entrée au dispositif générateur (5) et déplaceur (9), respectivement, sont intégrés dans un seul axe (30) commun aux deux dispositifs, qui sont du même genre ou de genres différents combinés.

8. Appareil, conformément à la revendication 7, **caractérisé en ce que** les dispositifs générateur (5) et déplaceur (9) comportent respectivement une première et une deuxième poignées coudées ou arbre manivelle (11, 12) montés sur cet axe (30) d'entrée, avec un premier et un deuxième tourillons de manivelle (13, 14) angulairement décalé les uns des autres de 180° et une première bielle (15) reliant ce tourillon de manivelle (13) à l'extrémité proximale de la tige (6) et une deuxième bielle (16) reliée à ce deuxième tourillon (14) avec la masse (8) qui se déplace sur une coulissière de guidage linéaire (17) parallèle à cette glissière de guidage (31) de la tige.

9. Appareil, conformément à la revendication 5, **caractérisé en ce que** le trajet du mouvement vibrateur linéaire alterné de la masse (8) à la sortie de ce dispositif de déplacement (9) est parallèle à l'axe (20) du mouvement tournant à son entrée, ce mécanisme générateur (5) étant sélectionné d'un groupe qui comporte une came de tambour et un mécanisme subordonné et un disque oscillant incliné par rapport à l'axe de rotation et mécanisme subordonné.

10. Appareil conformément à la revendication 6 ou 9, **caractérisé en ce que** cet axe (20) à l'entrée du mécanisme déplaceur (9) est relié à la force motrice du moteur (2) à travers un dispositif réducteur indépendant de ce dispositif réducteur (4) accouplé à l'axe d'entrée (10) du mécanisme générateur (5).

11. Appareil, conformément à la revendication 1, **caractérisé en ce que** le trajet du mouvement vibrateur linéaire alterné de la tige (6) à la sortie de ce mécanisme générateur (5) est parallèle à l'axe du mouvement tournant à son entrée, ce mécanisme générateur (5) étant sélectionné d'un groupe comprenant une came de tambour et un mécanisme subordonné et un disque oscillant incliné par rapport à l'axe de rotation et au mécanisme subordonné.

12. Appareil, conformément à la revendication 11, **caractérisé en ce que** le trajet du mouvement vibrateur linéaire alterné de la masse (8) à la sortie du mécanisme générateur (9) est parallèle à l'axe (20) du mouvement tournant à son entrée, le mécanisme générateur (20) étant sélectionné d'un groupe comprenant une came de tambour et un mécanisme subordonné et un disque oscillant incliné par rapport à l'axe de rotation et au mécanisme subordonné.

13. Appareil, conformément à la revendication 12, **caractérisé en ce que** ces axes (10, 20) d'entrée aux dispositifs générateur (5) et déplaceur (9), respectivement, sont construits sur un seul axe (30) commun aux deux dispositifs, qui sont du même genre ou de genres différents combinés.

14. Appareil conformément à la revendication 13, **caractérisé en ce que** les dispositifs générateur (5) et déplaceur (9) comportent une came de tambour (18) ayant une seule fente pour came (19) à laquelle sont reliés un premier et un deuxième mécanismes subordonnés (21, 22) aménagés dans des régions de cette fente (19) angulairement décalée de 180° par rapport à l'axe central du tambour (18), ce premier mécanisme subordonné (21) étant relié à l'extrémité proximale de la tige (6) et ce deuxième élément subordonné (22) étant relié à la masse (8) qui se déplace sur une glissière de guidage linéaire (17).

15. Appareil conformément à la revendication 13, **caractérisé en ce que** les dispositifs générateur (5) et déplaceur (9) comportent une came de tambour (23) ayant une première et une deuxième fente de came (24, 25) ayant des trajets opposés par rapport à un plan perpendiculaire à l'axe central du tambour (23), un premier mécanisme subordonné (26) étant aménagé couplé à cette première fente (24) et relié à l'extrémité proximale de la tige (6) et un deuxième élément subordonné (27) couplé à la deuxième fente (25) et relié à la masse (8) qui se déplace sur une glissière de guidage linéaire (17).

16. Appareil conformément à la revendication 11, **caractérisé en ce que** le trajet du mouvement vibrant linéaire alterné de la masse (8) à la sortie de ce dispositif déplaceur (9) est perpendiculaire à l'axe (20) du mouvement tournant à son entrée, le mécanisme générateur (5) étant sélectionné d'un groupe qui comprend une bielle et un arbre manivelle ou un mécanisme à poignée coudée et une came excentrique et un mécanisme subordonné.

17. Appareil conformément à la revendication 12 ou 16, **caractérisé en ce que** cet axe (20) à l'entrée du dispositif déplaceur (9) est relié à la force motrice du moteur (2) à travers un dispositif réducteur indépendant de ce dispositif réducteur (4) relié à l'axe d'entrée (10) du mécanisme générateur (5).

18. Appareil, conformément à la revendication 1 ou 2, **caractérisé en ce que** cet appareil est une moissonneuse batteuse mécanique portable et ce membre de commande (7) est un crochet capable d'être fixé à un arbre ou à une branche ou tronc secondaire afin de leur transmettre ce mouvement vibrateur pour forcer d'en retirer le fruit qui s'y trouve.
